# EUROPEAN PATENT APPLICATION

(11) **EP 3 643 737 A1**
(43) Date of publication of application: **29.04.2020**
(21) Application number: 18202852.2
(22) Date of filing: 26.10.2018
(51) Int. Cl.: C08J 5/24

(54) **THERMOPLASTIC PREPREG**

(71) Applicant: Johns Manville, Denver, CO 80202 (US)
(72) Inventor: ZHANG, Mingfu, Englewood, CO Colorado 80112 (US); ASRAR, Jawed, Englewood, CO Colorado 80111 (US)
(74) Representative: Dörr, Klaus

(57) **Abstract**

A thermoplastic prepreg includes a fabric, mat, web, or mesh of fibers and a thermoplastic material that fully impregnates the fibers such that the thermoplastic prepreg has a void content of less than 5 percent. The thermoplastic material includes or consists of polymers that are formed by polymerization of monomers or oligomers in which greater than 90 percent of the monomers or oligomers polymerize to form the thermoplastic material and in which less than 100 percent of the monomers or oligomers polymerize to form the thermoplastic material. The thermoplastic prepreg includes residual monomers or oligomers since less than 100 percent of the monomers or oligomers polymerize and the thermoplastic prepreg includes between 15 and 85 weight percent of the thermoplastic material.

## Description

### BACKGROUND

The use of fiber-reinforced composites is growing in popularity with applications in transportation, consumer goods, wind energy, and infrastructure. Some of the many reasons for choosing composites over traditional materials such as metals, wood, or non-reinforced plastics include reduced weight, corrosion resistance, and improved mechanical strength. Within the field of fiber-reinforced polymeric composites, thermoplastics are increasingly being used in place of thermosets as the matrix resin due to better durability, recyclability, thermoformability, improved throughput, lower material cost, and lower manufacturing cost.

Many continuous fiber reinforced thermoplastic composites are produced from impregnated tapes. These impregnated tapes may be unidirectional fiber tapes that are impregnated with a thermoplastic resin. These can be layered and thermoformed to produce a wide variety of composites of the desired shape and strength. There are significant challenges associated with producing impregnated tapes at low cost and high quality. Traditionally thermoplastic polymer resins are melted and applied to fibers, but molten thermoplastic polymer resins have very high viscosity and, when combined with the high fiber content that is desired, results in incomplete resin impregnation and/or low throughput. What is desired is a continuous manufacturing process with high throughput that produces fully impregnated thermoplastic prepregs without defects and good coupling between the fibers and the matrix resin. For the conventional partially impregnated thermoplastic prepregs, high pressure and/or longer processing time is needed in the consolidation step to promote additional impregnation, which introduces excessive flow of the resin matrix and causes detrimental changes in fiber orientation in the finished parts. The fully impregnated thermoplastic prepregs of the instant invention are advantageous in achieving the full impregnation and desired properties in final composite parts, as no additional impregnation is needed in the consolidation step.

### BRIEF SUMMARY

The embodiments described herein provide fully impregnated thermoplastic prepreg products, and specifically systems and methods for making the same. According to one aspect, a thermoplastic prepreg includes a fabric, mat, web, or mesh of fibers and a thermoplastic material that fully impregnates the fabric, mat, web, or mesh of fibers. The thermoplastic material impregnates the fibers such that the thermoplastic prepreg has a void content of less than 5 percent by volume. The thermoplastic material includes or consists of thermoplastic polymers that are formed by in situ polymerization of monomers or oligomers in which greater than 90 percent by weight of the monomers or oligomers polymerize to form the thermoplastic material. The thermoplastic prepreg includes between 15 and 85 weight percent of the thermoplastic material and the thermoplastic prepreg includes a residual monomer or oligomer content consisting of monomers or oligomers that are not polymerized during formation of the thermoplastic material.

In some embodiments, the thermoplastic material of the thermoplastic prepreg includes between 0.5 and 5 percent by weight of the residual monomer or oligomer content, and more commonly between 1 and 3 percent by weight of the residual monomer or oligomer content. In an exemplary embodiment, the residual monomer or oligomer content consists of caprolactam. The thermoplastic polymer may have a molecular weight of greater than 25,000 g/mol. The fabric, mat, web, or mesh of fibers may include a fabric formed of continuous fiber strands or rovings, a nonwoven mat formed of a plurality of entangled or bonded fibers, a web or mesh of chopped fibers, or a combination thereof.

In some embodiments, the fabric, mat, web, or mesh of fibers may have a layered configuration that includes a first layer, a second layer, and in some instances one or more additional layers. Each layer may include continuous fiber strands or rovings, a nonwoven mat of entangled or bonded fibers, a chopped fiber web or mesh, or a combination thereof. Each layer may have a different fiber configuration, orientation, or arrangement from one or more other layers. In some embodiments, the thermoplastic prepreg may also include hollow glass microspheres that are positioned atop the fabric, mat, web, or mesh of fibers or that are dispersed therein.

The fibers may include a sizing composition having a coupling agent that promotes bonding between the fibers and the thermoplastic polymer. The fibers may include glass fibers, carbon fibers, basalt fibers, metal fibers, ceramic fiber, natural fibers, synthetic organic fibers, aramid fibers, inorganic fibers, or combinations thereof. The thermoplastic prepreg may be a roll product or a sheet product as desired. In preferred embodiments, the thermoplastic material includes or consists of polyamides formed by in situ polymerization of caprolactam, laurolactam, or mixtures thereof.

According to another aspect, a thermoplastic prepreg includes a fabric, mat, web, or mesh of fibers and a thermoplastic material that fully impregnates the fabric, mat, web, or mesh of fibers. The thermoplastic material impregnates the fabric, mat, web, or mesh of fibers such that the thermoplastic prepreg has a void content of less than 5 percent by volume, and more commonly less than 3 percent by volume. The thermoplastic material includes or consists of thermoplastic polymers that are formed by in situ polymerization of monomers or oligomers in which greater than 90 percent of the monomers or oligomers polymerize to form the thermoplastic material and in which less than 100 percent of the monomers or oligomers polymerize to form the thermoplastic material. The thermoplastic prepreg includes residual monomers or oligomers since less than 100 percent of the monomers or oligomers polymerize. The thermoplastic prepreg includes between 15 and 85 weight percent of the thermoplastic material.

In some embodiments, less than 99.5 percent or less than 98.5 percent of the monomers or oligomers polymerize to form the thermoplastic material. The residual monomers or oligomers may consist of caprolactam. The thermoplastic polymer may have a molecular weight of greater than 25,000 g/mol.

The fabric, mat, web, or mesh of fibers may include a fabric formed of continuous fiber strands, a nonwoven mat formed of a plurality of entangled or bonded fibers, a web or mesh of chopped fibers, or a combination thereof. The fabric, mat, web, or mesh of fibers may have a layered configuration that includes a first layer, a second layer, and optionally one or more layers. Each layer may include a fabric of continuous fiber strands or rovings, a nonwoven mat of entangled or bonded fibers, a chopped fiber web or mesh, a light weight filler material, or any combination thereof. Each layer may have a different fiber configuration. orientation, and/or arrangement than another layer. In some embodiments, the thermoplastic prepreg includes hollow glass microspheres that are positioned atop the fabric, mat, web, or mesh of fibers or dispersed therein. The fibers of the fabric, mat, web, or mesh of fibers may include a sizing composition having a coupling agent that promotes bonding between the fibers and the thermoplastic polymer. Suitable sizing compositions may include a coupling activator compound, such as 2-oxo-N-(3-(triethoxysilyl)propyl)azepane-1-carboxamide that is disclosed in US patent 8,293,322. The fabric, mat, web, or mesh of fibers may include glass fibers, carbon fibers, basalt fibers, metal fibers, ceramic fiber, natural fibers, synthetic organic fibers, aramid fibers, inorganic fibers, or combinations thereof.

### BRIEF DESCRIPTION OF THE DRAWINGS

The present technology is described in conjunction with the appended figures:

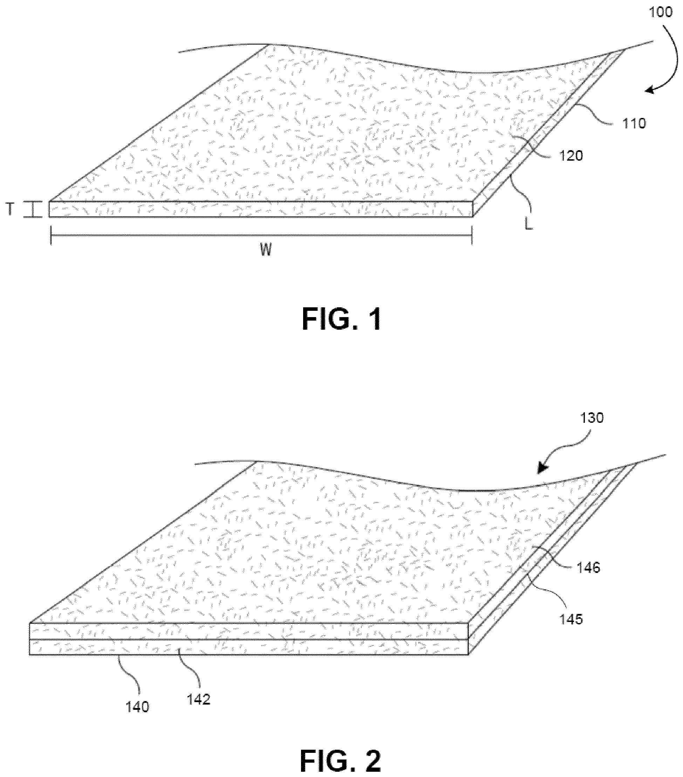

**FIGs. 1-3** illustrate exemplary prepregs that are fully impregnated with a thermoplastic material.

In the appended figures, similar components and/or features may have the same numerical reference label. Further, various components of the same type may be distinguished by following the reference label by a letter that distinguishes among the similar components and/or features. If only the first numerical reference label is used in the specification, the description is applicable to any one of the similar components and/or features having the same first numerical reference label irrespective of the letter suffix.

### DETAILED DESCRIPTION

The embodiments described herein are directed to thermoplastic prepregs and in particular, thermoplastic prepregs that are produced via the impregnation of fabric, mat, web, or mesh of fibers with low viscosity monomers or oligomers followed by in-situ polymerization of the monomers or oligomers to form a thermoplastic resin matrix within the fabric, mat, web, or mesh. In some embodiments, monomer or oligomer may be a solid material at room temperature, which is melted at a temperature above its melting point to form a liquid resin, prior to the application of the liquid resin to a fabric, mat, web, or mesh. The viscosity of the liquid monomer or oligomer at the time when it is applied to a fabric (i.e., at or above the melting point temperature), mat, web, or mesh is lower than 500 mPa-s, typically lower than 100 mPa-s, and more commonly lower than 10 mPa-s. The thermoplastic prepregs described herein have many advantages including complete resin impregnation of the fabric, mat, web, or mesh, and higher composite properties. The term thermoplastic polymer refers to polymers that are capable of being melted and molded or formed into various shapes multiple times. The low void content of the thermoplastic prepregs described herein is achieved mainly due to the full impregnation of fibrous reinforcement by the low viscosity of reactive resin (i.e., monomer or oligomer). The thermoplastic prepregs described herein are designed to be positioned in a mold and formed or molded into various desired shapes.

Among the commercially available reactive thermoplastic resin systems, caprolactam-based resin system has attracted a significant amount of attention, due to the relatively low cost of the raw materials, fast polymerization of the resin, and the widespread applications of polyamide-6 resin in automotive and other areas. In contrast to conventional polymerization techniques, the polymerization of the monomers or oligomers described herein may be achieved via in-situ anionic polymerization, which may offer several advantages including high molecular weight, an increased solvent resistance, etc. These advantages may be particularly evident when in-situ anionic polymerization technique is used to polymerize caprolactam.

In addition to the increased molecular weight and solvent resistance, in some instances the monomers or oligomers, and in particular caprolactam, may be polymerized so that a low level or amount of residual monomers or oligomers remain in the thermoplastic prepreg. The term "residual monomers or oligomers" or "residual monomer or oligomer content" as used herein refers to monomers or oligomers that do not polymerize during the polymerization process and thus, these materials remain in a non-polymerized monomer or oligomer state rather than forming a thermoplastic material. Stated differently, the thermoplastic prepregs described herein may not be fully polymerized. Conventional thermoplastic prepregs typically include polymerized thermoplastic resin and thus, these prepregs do not include an appreciable amount of residual monomers or oligomers. Any residual monomers or oligomers in conventional prepregs are negligible.

In one embodiment, the thermoplastic material of the thermoplastic prepreg may include between 0.5 and 5 percent by weight of residual monomers or oligomers, and more commonly between 1 and 3 percent, 1 and 2 percent, or 2 and 3 percent of the residual monomers or oligomers. In a more specific embodiment, the thermoplastic material of the thermoplastic prepreg may include between 0.5 and 5 percent, 1 and 3 percent, 1 and 2 percent, or 2 and 3 percent by weight of residual monomers. The weight percentage of residual monomers that are present in the thermoplastic material is determined in relation to the amount of monomers by weight that was initially added to the fiber material. For example, a residual monomer content of between 0.5 and 5 percent by weight means that between 0.5-5 weight percent of the monomers that were initially added to the fiber material remain in an unpolymerized state. These thermoplastic prepregs may include some additional amount of residual oligomers or may not include any residual oligomers so that only residual monomers remain in the thermoplastic prepreg. The amount of residual oligomers that are present in the thermoplastic material may be relatively small or negligible in comparison with the residual monomers that are present within the thermoplastic prepreg. Because the residual monomers or oligomers are embedded within the thermoplastic material matrix, it may be difficult to remove the residual monomers or oligomers from the thermoplastic prepreg.

In a specific embodiment, the monomers or oligomers consist of caprolactam. In such instances, the amount of residual caprolactam in the in-situ polymerized polyamide-6 thermoplastic prepregs may be in the range of between 0.5 and 5 percent by weight and more typically between 1 and 3 percent, 1 and 2 percent, or 2 and 3 percent by weight of the resin matrix. Because the small amount of residual caprolactam is embedded within the polyamide-6 resin matrix, it is often difficult to completely remove the residual caprolactam from the thermoplastic prepreg product.

Having described various aspect of the embodiments generally, additional aspects and features will be readily apparent in view of the description of the several drawings provided herein below.

### THERMOPLASTIC PREPREG WITH RESIDUAL MONOMER CONTENT

FIG. 1 illustrates a fiber-reinforced thermoplastic prepreg 100, or more simply a thermoplastic prepreg 100, that includes a fabric, mat, web, or mesh of fibers 120 and a thermoplastic material 110 that fully impregnates the fabric, mat, web, or mesh of fibers 120. The thermoplastic prepreg 100 commonly has a width W of between 0.1 and 3 meters, a thickness T of between 0.1 and 5 millimeters, and a length L of between 0.1 and 5 meters. The values of the width W, thickness T, and length L may be varied from those described above and may be tailored or selected based on a given application of the thermoplastic prepreg 100. Thus, the embodiments described herein are not limited to the ranges of the width, thickness, and/or length described. The thermoplastic prepreg 100 may be a roll product or may be a sheet product as desired or as required for a given application. The term "fully impregnated" means that the thermoplastic material 110 is fully disposed or distributed throughout the fabric, mat, web, or mesh of fibers 120, which results in the thermoplastic prepreg 100 having a void content of less than 5 percent by volume, and more commonly a void content of less than 3 percent by volume. The void content of the prepregs can be measured according to the test method ASTM D2734-16.

The thermoplastic material 110 includes or consists of polymers that are formed by in situ polymerization of a reactive pre-polymerized resin, which is also referred to herein as monomers or oligomers. For ease in describing the various embodiments, the reactive pre-polymerized resin will be generally referred to as monomers individually, oligomers individually, or as monomers or oligomers in combination. It should be realized that the term "reactive pre-polymerized resin" or "reactive resin" may be used in place of the term monomers, oligomers, and/or monomers or oligomers within the description and/or claims as desired. The low void content of the thermoplastic prepreg 100 is attributable to the low viscosity of the monomers or oligomers, which is typically lower than 100 mPa-s and more commonly lower than 10 mPa-s. The thermoplastic material 110 is formed by in-situ polymerization of the monomers or oligomers, and more commonly is formed by in-situ anionic polymerization of the monomer or oligomers. In a specific embodiment, the thermoplastic material 110 is formed by in-situ anionic polymerization of caprolactam. Anionic polymerization is not typically employed in forming thermoplastic prepregs due to its extreme sensitivity to moisture, in which even a trace amount of moisture may cause deactivation of the polymerization catalyst and result in a low monomer conversion. The anionic polymerization, however, may provide several advantages that are unique to the thermoplastic prepregs described herein.

The thermoplastic prepreg 100 includes 15 to 85 weight percent of the thermoplastic material 110. In preferred embodiments, the thermoplastic prepreg 100 includes 30 to 50 weight percent of the thermoplastic material 110. The thermoplastic material 110 may include or consist of polyamides formed by in-situ polymerization of caprolactam, laurolactam, or mixtures thereof. In a preferred embodiment, the thermoplastic material 110 includes polyamide-6 that is formed by in situ polymerization of caprolactam. In the thermoplastic prepreg 100, greater than 90 percent of the monomers or oligomers are polymerized to form the thermoplastic material 110, but less than 100 percent of the monomers or oligomers are polymerized. As such, the thermoplastic prepreg 100 includes a residual amount or content of monomers or oligomers, which as described above are monomers or oligomers that remain in a non-polymerized monomer or oligomer state. More commonly the thermoplastic prepreg 100 includes a thermoplastic material 110 content in which greater than 93 percent, 95 percent, 96 percent, or even 97 percent of the monomers or oligomers are polymerized to form the thermoplastic material 110. In such embodiments, it is common that less than 99.5 percent, 98.5 percent, or even 98 percent of the monomers or oligomers react to form the thermoplastic material 110. As such, the thermoplastic prepreg 100 may include a thermoplastic material 110 content in which between 95 and 99.5 percent of the monomers or oligomers are polymerized, between 96 and 99 percent of the monomers or oligomers are polymerized, between 97 and 99 percent of the monomers or oligomers are polymerized, between 95 and 98.5 percent of the monomers or oligomers are polymerized, between 96 and 98.5 percent of the monomers or oligomers are polymerized, between 96 and 98 percent of the monomers or oligomers are polymerized, between 97 and 98.5 percent of the monomers or oligomers are polymerized, or between 97 and 98 percent of the monomers or oligomers are polymerized.

The above described amount of polymerization of the monomers or oligomers results in a residual monomer or oligomer content within the thermoplastic material 110 of between 0.5 and 5 percent. In other embodiments, the thermoplastic material 110 may include a residual monomer or oligomer content of between 1 and 4 percent, 2 and 4 percent, 1 and 3 percent, 1.5 and 3 percent, 2 and 3 percent, or 1 and 2 percent. In some embodiments, the above described residual monomer or oligomer content/percentages may refer specifically to an amount of residual monomers that remain in the thermoplastic material 110. In such embodiments, the thermoplastic material 110 may include only (i.e., consist of) residual monomers so that the thermoplastic material 110 does not include any residual oligomers, or only includes a negligible amount of residual oligomers. In other embodiments, the thermoplastic material 110 may include both residual monomers and residual oligomers and the above residual monomer or oligomer content/percentages may refer only to the residual monomer content or may refer to both the residual monomer and oligomer content. The residual monomer or oligomer in the prepreg can be measured via a solvent extraction method. As an example, the amount of residual caprolactam in a polyamide-6 prepreg is measured via the extraction of caprolactam from powder of grounded prepreg using hot water.

Conventional thermoplastic prepregs typically do not include an appreciable content or amount of residual monomers or oligomers. Rather, conventional systems for manufacturing thermoplastic prepregs are typically configured to use thermoplastic polymer resins so that the resulting thermoplastic prepreg does not include, or is essentially devoid of, residual monomers and/or oligomers. However, in order to achieve an acceptable degree of resin impregnation in the conventional thermoplastic prepregs, polymeric resins of relatively low molecular weight are typically used to reduce resin viscosity and to facilitate resin impregnation. A residual monomer and/or oligomer content is generally considered non-beneficial because it is believed to reduce mechanical properties of the resulting thermoplastic prepregs. In contrast to these conventional thermoplastic prepregs, the thermoplastic prepreg 100 described herein is produced via in situ polymerization of monomers or oligomers, which have very low melt viscosity. The low melt viscosity of monomers or oligomers ensures full resin impregnation of the fabric, mat, web, or mesh of fibers. The thermoplastic prepreg 100 described herein include a residual monomer or oligomer content subsequent to polymerization of the monomers or oligomers. The inclusion of some residual monomer or oligomer content within the thermoplastic prepreg 100 may reduce the thermoplastic prepreg manufacturing time and/or may reduce an energy requirement for producing the prepregs.

In a specific embodiment, the residual monomer or oligomer content may include lactams, such as caprolactam, laurolactam, or mixtures thereof. In a specific embodiment, the residual monomer or oligomer content consists of caprolactam.

As briefly mentioned above, the thermoplastic material 110 is typically produced via in-situ anionic polymerization of the monomers or oligomers. The anionic polymerization may result in a thermoplastic material having a molecular weight that is greater than a molecular weight of conventional thermoplastic polymer that is used to produce conventional thermoplastic prepreg. As such, the thermoplastic material 110 of the thermoplastic prepreg 100 may have a molecular weight of greater than 25,000 g/mol. The molecular weight of the thermoplastic material may be determined via size exclusion chromatography. In contrast, in the conventional thermoplastic prepregs, lower molecular weight polymers (i.e., thermoplastic polymers having molecular weights significantly less than 25,000 g/mol) are typically used to reduce the melt viscosity of polymeric resin to facilitate resin impregnation.

As a specific example, anionic polymerization of caprolactam typically produces polyamide-6 with a molecular weight that is greater than that of hydrolytically polymerized polyamide-6, which is commonly used in conventional polyamide-6 thermoplastic prepregs. Anionic polymerization of caprolactam is a living polymerization, which may produce polymers of high molecular weight, because of the absence of chain termination. In addition, due to the exothermic temperature rise during the anionic polymerization of caprolactam, high-temperature branching reactions like Claisen condensation and transamidation occurs, which results in a further increase in molecular weight of the polyamide-6. The increased molecular weight of the polyamide-6 results in a reduction in solubility of the polyamide-6 in solvents that typically dissolve conventional hydrolytically polymerized polyamide-6. For example, polyamide-6 resin formed via anionic polymerization of caprolactam typically has reduced solubility or is even insoluble in solvents such as hexafluoroisopropanol (HFIP), while hydrolytically polymerized polyamide-6 is soluble in HFIP. As such, the fiber-reinforced thermoplastic prepreg 100 may have an increased solvent resistance - i.e., a solvent resistance that is better than conventional thermoplastic materials. The solvent resistance of the thermoplastic prepreg 100 may be especially prevalent when the thermoplastic prepreg 100 includes in-situ anionically polymerized polyamide-6.

In some embodiments, the fabric, mat, web, or mesh of fibers 120 includes a fabric formed of continuous fiber strands or rovings, a nonwoven mat that is formed of a plurality of entangled or bonded fibers, a web or mesh of chopped fibers, or a combination of these various different materials.

The term continuous fiber strand or roving refers to a bundle of fibers that are positioned adjacent one another to form a rope, thread, or cord like component. A common type of fiber that is used in the rovings is glass fibers, although various other fibers could be used such as carbon fibers, basalt fibers, metal fibers, ceramic fiber, natural fibers, synthetic organic fibers such as aramid fibers, and other inorganic fibers. The term fabric or mat as used herein refers to woven or nonwoven materials. The woven materials are materials that are produced by weaving multiple continuous fiber strands or rovings together (hereinafter rovings). The rovings are commonly woven so that a first plurality of rovings extend in a first direction (e.g., weft direction) and a second plurality of rovings extend in a second direction that is typically orthogonal to the first direction (e.g., warp direction). The first plurality of rovings are roughly parallel with one another as are the second plurality of rovings. The fabrics may be unidirectional, where all or most of the rovings run or extend in the same direction, or may be bidirectional, wherein the rovings run in two, typically orthogonal, directions. Various weaves may be used to form the fabric described herein, including: plain weaves, twill weaves, satin weaves, multiaxial weaves, or stitching. The fabrics that are employed may contain any kind of fabric or multi-axial fabric material. The fabrics or mats may be a hybrid material that includes multiple different fiber types.

The term nonwoven fiber mat refers to mats that are formed of fibers that are entangled or meshed together rather than being woven in a uniform direction. The fibers are typically short fibers that are bonded together via a chemical binder or mechanical binding (e.g., needling). The prepregs that include nonwoven fiber mats exhibit more uniform strength characteristics in comparison to the prepregs that include woven fabrics since the fibers in nonwoven fiber mats are more randomly oriented. Stated differently, the strength of the prepregs that include nonwoven fiber mats is typically less directionally dependent so that a more uniform strength is achieved. In comparison, the strength of the prepregs that include woven fabrics is directionally dependent so that the prepregs exhibit substantially more strength in a direction that is aligned with the fibers and exhibit less strength in a direction that is misaligned with the fibers.

The term chopped fiber web or mesh refers to mats that are formed by chopping or cutting rovings or fiber strands into short fiber segments. The chopped fiber web or mesh may be formed via a fiber chopper mechanism and/or via a fiber scattering device. The fiber length of the chopped fibers is typically between 10 and 100 mm and more commonly between 25 and 50 mm, which is determinable via microscopy. The fiber diameter is typically between 1 and 30 µm and more commonly between 5 and 20 µm. The chopped fiber web or mesh is typically unbonded, which means that a chemical binder is not used to bond the individual fiber segments together, prior to the impregnation of the fiber web or mesh by the monomers or oligomers. The fiber segments may also not be mechanically bonded or entangled. The thermoplastic material 110 within the thermoplastic prepreg 100 may be the material that binds or bonds the chopped fibers together. The chopped fiber web or mesh may include multiple fiber types and/or fiber sizes as desired. The multiple fiber types may be homogenously or uniformly dispersed within the chopped fiber web or mesh to form a hybrid chopped fiber web or mesh. The thickness of the thermoplastic prepregs that include chopped fiber web or mesh may be between 0.1 to 5 mm, and more commonly between 0.2 to 3 mm. Other thicknesses may be employed depending on a given application of the prepreg.

In some embodiments, the thermoplastic prepreg 100 may include a lightweight filler material to decrease the weight of the thermoplastic prepreg 100 and/or to increase the thickness of the thermoplastic prepreg 100 without increasing, or while reducing, the density of the prepreg. The term "lightweight filler material" means a material that has a density of between 0.1-1.0 g/cc. The lightweight filler material may be positioned atop the fabric, mat, web, or mesh of fibers 120 or that are dispersed within the fabric, mat, web, or mesh of fibers 120. In a specific embodiment the lightweight filler material may be hollow glass microspheres, which are also commonly referred to as glass bubbles. In other embodiments, the lightweight filler material may be perlite or other lightweight materials. The thickness of the thermoplastic prepregs that includes lightweight filler material may be between 0.1 to 5 mm, and more commonly between 0.2 to 3 mm. Other thicknesses may be employed depending on a given application of the prepreg.

The fabric, mat, web, or mesh of fibers 120 may include any combination of a fabric, nonwoven fiber mat, chopped fiber web or mesh, or a lightweight filler material as desired. The thermoplastic prepreg 100 of FIG. 1 illustrates a single layer prepreg 100 that includes one or more of these materials. In other embodiments, the prepreg may include one or more additional layers of these materials as desired.

The fibers used in the fabric, mat, web, or mesh of fibers 120 may be treated with a sizing composition including coupling agent(s) that promote bonding between reinforcing fibers and thermoplastic polymer 110. For example, the fibers may be sized with one or more coupling agents that covalently bond the thermoplastic polymer 110 to the fibers. Exemplary coupling agents may include coupling-activator compounds having a silicon-containing moiety and an activator moiety. Specific examples of coupling-activator compounds include 2-oxo-N-(3-(triethoxysilyl)propyl)azepane-1-carboxamide. Exemplary coupling agents may also include blocked isocyanate coupling compounds having a silicon-containing moiety and a blocked isocyanate moiety. Exemplary coupling agents may also include coupling compounds having a functional group that may react with the reactive resin to form covalent bond. Specific example of the coupling compounds having a functional group include silane coupling agent having amino, epoxy, or ureido functional groups. The fibers may include or consist of glass fibers, carbon fibers, basalt fibers, metal fibers, ceramic fiber, natural fibers, synthetic organic fibers, aramid fibers, inorganic fibers, or combinations thereof. In another embodiment, the fiber sizing contains a mixture of silane coupling agents, polymeric film formers, and other additives that are designed to enhance the interfacial bonding between the glass fiber and thermoplastic polymer matrix. Specifically, a reactive silane is used that allows some of the polymerization to be initiated directly from the glass surface, thus improving the coupling between the reinforcing fibers and the resin matrix to improve composite properties.

### HYBRID THERMOPLASTIC PREPREGS

In some embodiments, the thermoplastic prepreg may include a hybrid or layered configuration in which a single prepreg layer includes a combination of the materials described above (i.e., a fabric, nonwoven mat, chopped fiber web/mesh, or lightweight filler material) and/or in which the prepreg includes multiple layers of the materials described above. For example, as illustrated in FIG. 2, a thermoplastic prepreg 130 includes a first layer 140 and a second layer 145 that is positioned atop the first layer. The first layer 140 includes a material 142, which may be a fabric having continuous fiber strands or rovings; a nonwoven mat of entangled or bonded fibers; a chopped fiber web or mesh; a lightweight filler material; or a combination of any of these materials. The second layer 145 also includes a material 146, which may be a fabric having continuous fiber strands or rovings; a nonwoven mat of entangled or bonded fibers; a chopped fiber web or mesh; a lightweight filler material; or a combination of any of these materials. The first layer 140 and the second layer 145 have different fiber configurations, orientations, arrangements, and/or thicknesses. The first layer 140 may be between 0.2 and 3 mm thick and the second layer 145 may be between 0.2 and 3 mm thick.

In one embodiment, the first layer may include a fabric, and the second layer may include a nonwoven mat. In another embodiment, the first layer may include a fabric, and the second layer may include a chopped fiber web or mesh. In yet another embodiment, the first layer may include a nonwoven mat, and the second layer may include a chopped fiber web or mesh. The composition of each layer, the density of each layer, and/or the thickness of each layer may be selected based on a given application for the thermoplastic prepreg and/or based on a desired prepreg property. The thermoplastic material fully impregnates each layer of the thermoplastic prepreg. The thermoplastic prepreg has a void content, a thermoplastic material molecular weight, and/or a residual monomer or oligomer content as described herein.

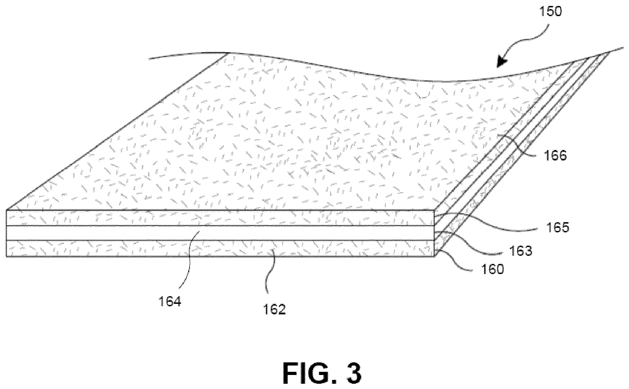

FIG. 3 illustrates a thermoplastic prepreg 150 that includes a first layer 160, a second layer 163 that is positioned atop the first layer 160, and a third layer 165 that is positioned atop the second layer 163. The first layer 160 includes a reinforcement material 162, which may be a fabric having continuous fiber strands or rovings; a nonwoven mat of entangled or bonded fibers; a chopped fiber web or mesh; a lightweight filler material; or a combination of any of these materials. The second layer 163 also includes a reinforcement material 164, which may be a fabric having continuous fiber strands or rovings; a nonwoven mat of entangled or bonded fibers; a chopped fiber web or mesh; a lightweight filler material; or a combination of any of these materials. The third layer 165 also includes a reinforcement material 166, which may be a fabric having continuous fiber strands or rovings; a nonwoven mat of entangled or bonded fibers; a chopped fiber web or mesh; a lightweight filler material; or a combination of any of these materials. The first layer 160, the second layer 163, and the third layer 165 have different fiber configurations, orientations, arrangements, and/or thicknesses. The first layer 160 may be between 0.2 and 3 mm thick, the second layer 163 may be between 0.2 and 3 mm thick, and the third layer 165 may be between 0.2 and 3 mm thick.

In one embodiment, the first layer may include a fabric, the second layer may include a nonwoven mat, and the third layer may include a chopped fiber web or mesh. In another embodiment, the first layer may include a fabric, the second layer may include a chopped fiber web or mesh, and the third layer may include a nonwoven mat. In yet another embodiment, the first layer may include a fabric, the second layer may include a chopped fiber web or mesh, and the third layer may include a fabric. The composition of each layer, the density of each layer, and/or the thickness of each layer may be selected based on a given application for the thermoplastic prepreg and/or based on a desired prepreg property. The thermoplastic material fully impregnates each layer of the thermoplastic prepreg. The thermoplastic prepreg has a void content, a thermoplastic material molecular weight, and/or a residual monomer or oligomer content as described herein.

When the thermoplastic prepregs of FIGs. 1-3 are subjected to a subsequent heating and/or pressure process, the thermoplastic polymer melts or softens to allow the thermoplastic prepreg to be molded or formed into a composite part. For example, the thermoplastic prepreg may be compression molded into a desired composite part. Exemplary techniques for forming the prepregs into the fiber-reinforced composite articles may include compression molding of a single prepreg layer or multiple prepreg layers. When the prepreg includes partially-polymerized resin, the compression molding process may include a heating step (e.g., hot pressing) to fully polymerize the resin. Heat may also be used in the compression molding of fully-polymerized prepregs to melt and mold the prepreg into the shape of the final article.

The prepregs may also be used to in conjunction with other fibers and resin materials to make the final composite article. For example, the prepreg may be placed in selected sections of a tool or mold to reinforce the article and/or provide material in places that are difficult to reach for thermoset and/or thermoplastic resins. For example, the prepregs may be applied to sharp corners and other highly structured areas of a mold or layup used in reactive injection molding processes (RIM), structural reactive injective molding processes (SRIM), resin transfer molding processes (RTM), vacuum-assisted resin transfer molding processes (VARTM), spray-up forming processes, filament winding processes, and long-fiber injection molding processes, among others. The prepreg may also be used as local reinforcement or for overmolding during injection and compression molding processes including LFT (long fiber thermoplastic) and D-LFT (direct-long fiber thermoplastic).

Exemplary composite products that may be formed from the prepregs include: automotive components, wind turbine blade components, building and construction components, electrical components, sports and leisure components, and/or other components. Exemplary automotive components include: cockpit, seats, instrument panels, side beams, bottom plate, bottom plate side beam, door trims, body panels, openings, underbody, front/rear modules, engine compartment, engine covers, battery trays, oil pans, bonnets/hoods, fenders, spoilers, and the like.

Exemplary wind turbine blade components include: spar cap, shells, root inserts, and the like. Exemplary building and construction components include: columns, pediments, domes, panels, window profiles, ladder rails, and the like. Exemplary electrical components include: light poles, circuit boards, electrical junction boxes, and the like. Exemplary sports and leisure components include: golf club shafts, golf trolleys, and the like. Other components that may be formed form the prepregs include: components for mass transportation, agricultural equipment, and trailers/RV including passenger seats, standbacks, wall claddings, floor panels, large panels for trailer walls, truck and tractor cabs, bus body shells, cargo containers, and the like.

In a specific embodiment, a battery tray or compartment for an electric car or vehicle may be molded using the fully impregnated thermoplastic prepregs described herein. The battery compartment may be molded from a single piece of the prepreg material, thereby eliminating the need to use consolidated multi-ply unidirectional tapes to reinforce load-carrying areas of the battery compartment, as is done in conventional processes.

In some embodiments, the thermoplastic prepreg describe herein may comprise: a) 30 to 80% by weight of fibrous material; b) 20 to 70% by weight of thermoplastic material; and c) 0 to 30% by weight of lightweight filler. In preferred embodiments, the thermoplastic prepreg may comprise: a) 50 to 70% by weight of fibrous material; b) 30 to 50% by weight of thermoplastic material; and c) 0 to 15% by weight of lightweight filler.

### EXAMPLE

A polyamide-6 prepreg was produced that included a uni-directional stitched fabric having an area weight of 650 g/m². The glass content of the prepreg was 56% by weight, which was measured by burning of organic materials the prepreg sample under 600°C for 4 hours. To measure the amount of residual monomer, powder samples were prepared by cryo-grinding small pieces of prepregs in a grinder with liquid nitrogen. Three 1.5-gram powder samples were then extracted in 60 mL vials with water at 150°C using the Dionex™ ASE™ 350 Accelerated Solvent Extractor (ASE) from Thermo Scientific. The water in the extraction vials was then evaporated in the turbo evaporator at 65°C under a stream of nitrogen. The residues were dried in a vacuum oven at 55°C; and then weighed to determine the amount of extracted monomer. The amounts of extracted residual monomer were calculated. The average residual monomer content was 1.23% by weight based on the total weight of the resin.

"ASTM" refers to American Society for Testing and Materials and is used to identify a test method by number. The year of the test method is either identified by suffix following the test number or is the most recent test method prior to the priority date of this document. For any other test method or measurement standard defined or described herein, the relevant test method or measurement standard is the most recent test method or measurement standard prior to the priority date of this document. Where a range of values is provided, it is understood that each intervening value, to the tenth of the unit of the lower limit unless the context clearly dictates otherwise, between the upper and lower limits of that range is also specifically disclosed. Each smaller range between any stated value or intervening value in a stated range and any other stated or intervening value in that stated range is encompassed. The upper and lower limits of these smaller ranges may independently be included or excluded in the range, and each range where either, neither, or both limits are included in the smaller ranges is also encompassed within the invention, subject to any specifically excluded limit in the stated range. Where the stated range includes one or both of the limits, ranges excluding either or both of those included limits are also included.

As used herein and in the appended claims, the singular forms "a", "an", and "the" include plural referents unless the context clearly dictates otherwise. Thus, for example, reference to "a method" includes a plurality of such methods and reference to "the glass fiber" includes reference to one or more glass fibers and equivalents thereof known to those skilled in the art, and so forth. The invention has now been described in detail for the purposes of clarity and understanding. However, it will be appreciated that certain changes and modifications may be practice within the scope of the appended claims.

Also, the words "comprise," "comprising," "include," "including," and "includes" when used in this specification and in the following claims are intended to specify the presence of stated features, integers, components, or steps, but they do not preclude the presence or addition of one or more other features, integers, components, steps, acts, or groups.

## Claims

1. A thermoplastic prepreg comprising:
i) a fabric, mat, web, or mesh of fibers; and
ii) a thermoplastic material that fully impregnates the fabric, mat, web, or mesh of fibers such that the thermoplastic prepreg has a void content of less than 5 percent by volume, the thermoplastic material comprising thermoplastic polymers that are formed by in situ polymerization of monomers or oligomers in which greater than 90 percent of the monomers or oligomers polymerize to form the thermoplastic polymer; wherein:
iii) the thermoplastic prepreg includes between 15 and 85 weight percent of the thermoplastic material; and
iv) the thermoplastic prepreg includes a residual monomer or oligomer content consisting of monomers or oligomers that are not polymerized during formation of the thermoplastic polymer.

2. The thermoplastic prepreg as claimed in claim 1, wherein the thermoplastic material includes between 0.5 and 5 percent of the residual monomer or oligomer content, preferably the thermoplastic material includes between 1 and 3 percent of the residual monomer or oligomer content

3. The thermoplastic prepreg as claimed in claim 1 or 2, wherein the residual monomer or oligomer content consists of caprolactam.

4. The thermoplastic prepreg as claimed in claim 1 or 2 or 3, wherein the thermoplastic polymer has a molecular weight of greater than 25,000 g/mol.

5. The thermoplastic prepreg as claimed in one or more of claims 1 to 4, wherein the fabric, mat, web, or mesh of fibers includes a fabric formed of continuous fiber strands, a nonwoven mat formed of a plurality of entangled or bonded fibers, a web or mesh of chopped fibers, or a combination thereof, preferably the fabric, mat, web, or mesh of fibers has a layered configuration having a first layer that includes continuous fiber strands, entangled or bonded fibers, or chopped fibers, and a second layer that includes continuous fiber strands, entangled or bonded fibers, or chopped fibers, wherein the first layer has a different fiber configuration than the second layer.

6. The thermoplastic prepreg as claimed in one or more of claims 1 to 5, thermoplastic prepreg further comprises hollow glass microspheres that are positioned atop the fabric, mat, web, or mesh of fibers or dispersed therein.

7. The thermoplastic prepreg as claimed in one or more of claims 1 to 6, wherein the fibers of the fabric, mat, web, or mesh of fibers include a sizing composition having a coupling agent that promotes bonding between the fibers and the thermoplastic polymer.

8. The thermoplastic prepreg as claimed in one or more of claims 1 to 7, wherein the fabric, mat, web, or mesh of fibers include glass fibers, carbon fibers, basalt fibers, metal fibers, ceramic fibers, natural fibers, synthetic organic fibers, aramid fibers, inorganic fibers, or a combination thereof.

9. The thermoplastic prepreg as claimed in one or more of claims 1 to 8, wherein the thermoplastic prepreg is a roll product and/or a sheet product.

10. The thermoplastic prepreg as claimed in one or more of claims 1 to 9, wherein the thermoplastic polymer comprises polyamides formed by in situ polymerization of caprolactam, laurolactam, or mixtures thereof.

11. A thermoplastic prepreg comprising:
i) a fabric, mat, web, or mesh of fibers; and
ii) a thermoplastic material that fully impregnates the fabric, mat, web, or mesh of fibers such that the thermoplastic prepreg has a void content of less than 5 percent the thermoplastic material comprising thermoplastic polymers that are formed by in situ polymerization of monomers or oligomers in which greater than 90 percent of the monomers or oligomers polymerize to form the thermoplastic polymer and in which less than 100 percent of the monomers or oligomers polymerize to form the thermoplastic polymer such that the thermoplastic prepreg includes residual monomers or oligomers;
iii) wherein the thermoplastic prepreg includes between 15 and 85 weight percent of the thermoplastic material.

12. The thermoplastic prepreg as claimed in claim 11, wherein less than 99.5 percent of the monomers or oligomers polymerize to form the thermoplastic polymer, preferably wherein less than 98.5 percent of the monomers or oligomers polymerize to form the thermoplastic polymer.

13. The thermoplastic prepreg as claimed in claim 11 or 12, wherein the residual monomers or oligomers consists of caprolactam.

14. The thermoplastic prepreg as claimed in claim 11 or 12 or 13, wherein the thermoplastic polymer has a molecular weight greater than 25,000 g/mol.

15. The thermoplastic prepreg as claimed in one or more of claims 11 to 14, wherein the fabric, mat, web, or mesh of fibers includes a fabric formed of continuous fiber strands, a nonwoven mat formed of a plurality of entangled or bonded fibers, a web or mesh of chopped fibers, or a combination thereof, preferably the fabric, mat, web, or mesh of fibers has a layered configuration having a first layer that includes continuous fiber strands, entangled or bonded fibers, or chopped fibers, and a second layer that includes continuous fiber strands, entangled or bonded fibers, or chopped fibers, wherein the first layer has a different fiber configuration than the second layer.

16. The thermoplastic prepreg as claimed in one or more of claims 11 to 15, thermoplastic prepreg further comprises hollow glass microspheres that are positioned atop the fabric, mat, web, or mesh of fibers or dispersed therein.

17. The thermoplastic prepreg as claimed in one or more of claims 11 to 16, wherein the fibers of the fabric, mat, web, or mesh of fibers include a sizing composition having a coupling agent that promotes bonding between the fibers and the thermoplastic polymer.

18. The thermoplastic prepreg as claimed in one or more of claims 11 to 17, wherein the fabric, mat, web, or mesh of fibers include glass fibers, carbon fibers, basalt fibers, metal fibers, ceramic fiber, natural fibers, synthetic organic fibers, aramid fibers, inorganic fibers, or combinations thereof.
